# FASCICULE DE BREVET EUROPEEN

(11) **EP 1 178 097 B1**
(45) Date de publication et mention de la délivrance du brevet: **11.05.2005**
(21) Numéro de dépôt: 01117900.9
(22) Date de dépôt: 24.07.2001
(51) Int. Cl.: C09J 175/02, C08G 18/50, C08G 18/79, C08G 18/38, C08G 18/18, B29D 30/54

(54) **Colle pour compositions de caoutchouc, son procédé de préparation et articles comportant cette colle**
Klebstoff für Kautschukzusammensetzungen, sein Herstellungsverfahren und Artikel, die diesen Klebstoff enthalten
Adhesive for rubber compositions, its process of preparation and articles comprising this adhesive

(30) Priorité: 03.08.2000 FR 0010292
(43) Date de publication de la demande: 06.02.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Viegas, Nathalie, 63200 Riom (FR); Isnard, Roger, 63000 Clermont-Ferrand (FR)
(74) Mandataire: Hiebel, Robert

(56) Documents cités:
- EP-A- 0 316 666
- EP-A- 0 538 694
- US-A- 5 162 481
- DATABASE WPI Section Ch, Week 198502 Derwent Publications Ltd., London, GB; Class A25, AN 1985-008487 XP002165719 & JP 59 098180 A (NIPPON POLYURETHANE KOGYO KK), 6 juin 1984 (1984-06-06)

## Description

La présente invention concerne notamment une colle utilisable à la température ambiante pour faire adhérer deux compositions de caoutchouc réticulées l'une à l'autre, un procédé de préparation de cette colle, une bande de roulement d'enveloppe de pneumatique et une telle enveloppe comportant cette colle, et un article comprenant deux parties solidarisées l'une avec l'autre par l'intermédiaire de cette colle.

La colle selon l'invention est à base d'un copolymère qui comporte des groupes urée ou uréthanne, et elle est telle que ledit copolymère comprend également des groupes isocyanurate, ledit copolymère étant le produit de la réaction:
- d'un polyisocyanate de fonctionnalité égale ou supérieure à trois et comprenant des cycles isocyanurate,
- d'un polymère fonctionnel comportant un groupe amine ou alcool à chacune de ses deux extrémités de chaîne, ledit polymère appartenant à la famille constituée par les polyéther diamines, les polyéther diols, les polyester diols et les copolymères (éther-ester) diol, et
- d'au moins un catalyseur de trimérisation destiné à former des cycles isocyanurate à partir de groupes isocyanate, de telle manière que le rapport molaire du nombre total de moles de groupes isocyanate sur le nombre total de moles d'amine soit compris entre 1,5 et 2,2.

La présente invention concerne une colle utilisable à la température ambiante pour faire adhérer deux compositions de caoutchouc réticulées l'une à l'autre, un procédé de préparation de cette colle, une bande de roulement d'enveloppe de pneumatique et une telle enveloppe comportant cette colle, et un article comprenant deux parties solidarisées l'une avec l'autre par l'intermédiaire de cette colle. L'invention s'applique notamment à l'industrie du rechapage de pneumatiques, pour coller une bande de roulement réticulée sur une carcasse de pneumatique également réticulée (rechapage dit « à froid »).

Les colles connues à ce jour pour solidariser l'un avec l'autre deux articles élastomères cuits, tels qu'une carcasse d'enveloppe de pneumatique à rechaper et une bande de roulement à l'état réticulé, sont souvent à base d'un polymère de type polyuréthanne ou polyurée.

On connaît, par le document de brevet américain US-A-5 183 877, une colle polymère qui est le produit de la réaction d'un prépolymère polyurée, qui peut comprendre des groupes uréthanne et qui se termine par des groupes isocyanate, avec un mélange binaire constitué d'un polyéther aminé particulier (le polyoxytétraméthylène di(p-aminobenzoate)) et d'un allongeur de chaîne constitué d'une diamine aromatique.

Ce prépolymère est obtenu à l'état de gel en faisant réagir un polyisocyanate, tel qu'un méthylène diisocyanate modifié par une carboimide (CD-MDI en abrégé), avec un polyéther aminé tel que celui précité.

Un inconvénient majeur de la colle décrite dans ce document réside dans l'utilisation d'un prépolymère pour la préparer. En effet, la viscosité élevée de ce prépolymère implique nécessairement, d'une part, d'utiliser l'allongeur de chaîne précité et, d'autre part, d'amener ledit prépolymère à une température de 40° C pour passer de l'état de gel, qui le caractérise à la température ambiante, à l'état liquide.

La demanderesse a découvert d'une manière surprenante qu'un copolymère qui comporte des groupes isocyanurate associés à des groupes urée ou uréthanne, qui est le produit de la réaction:
- d'un polyisocyanate de fonctionnalité égale ou supérieure à trois et comprenant des cycles isocyanurate,
- d'un polymère fonctionnel comportant un groupe amine ou alcool à chacune de ses deux extrémités de chaîne, ledit polymère appartenant à la famille constituée par les polyéther diamines, les polyéther diols, les polyester diols et les copolymères (éther-ester) diol, et
- d'au moins un catalyseur de trimérisation destiné à former des cycles isocyanurate à partir de groupes isocyanate, de telle manière que le rapport molaire du nombre total de moles de groupes isocyanate sur le nombre total de moles d'amine soit compris entre 1,5 et 2,2,
peut être utilisé à titre de colle pour faire adhérer d'une manière satisfaisante à la température ambiante deux compositions de caoutchouc réticulées l'une à l'autre, du fait de la viscosité réduite que présente ledit copolymère à la température ambiante.

On notera que ces cycles isocyanurates confèrent à la colle ainsi obtenue une tenue thermique satisfaisante à des températures supérieures à 100° C, par exemple pouvant être atteintes par une enveloppe de pneumatique en roulage.

Une telle colle présente par ailleurs un « temps ouvert » (temps limite d'utilisation, encore appelé « pot life ») relativement élevé. A titre indicatif, ce « temps ouvert » peut varier de 5 min. à 15 min.

A titre de polyisocyanate selon l'invention, on utilise des polyisocyanates présentant une viscosité réduite à la température ambiante, de préférence présentant une viscosité mesurée selon la technique Brookfield qui est sensiblement comprise entre 8 et 16 Poises.

Ces polyisocyanates peuvent être aliphatiques ou aromatiques, comme par exemple des dimères ou des trimères.

Selon un exemple préférentiel de réalisation de l'invention, on utilise à titre de polyisocyanate un trimère dérivé de l'hexaméthylène diisocyanate présentant une fonctionnalité égale ou supérieure à 3.

A titre de polymère fonctionnel, on peut par exemple utiliser une polyéther diamine, qui est destinée à réagir avec ledit polyisocyanate pour l'obtention desdits groupes urée. On peut par exemple utiliser une polyoxypropylène diamine, une polyoxyéthylène diamine ou, de préférence, une polyoxytétraméthylène diamine telle que le polyoxytétraméthylène di(p-aminobenzoate).

On peut également utiliser, à titre de polyéther diamine, un polyéther comprenant un groupe aliphatique aminé à chaque extrémité de chaîne, tel qu'une polypropylèneglycol diamine ou une polytétrahydrofurane diamine (obtenue par réaction d'acide anthranilique sur du polytétrahydrofurane, dont la masse moléculaire peut varier de 650 à 2000 g/mole).

A titre de polymère fonctionnel, on peut également utiliser un polymère diol d'éther et/ou d'ester, qui est destiné à réagir avec ledit polyisocyanate pour l'obtention desdits groupes uréthanne.

On peut par exemple utiliser un polyéther diol, tel qu'un polypropylèneglycol, un copolymère (oxyde d'éthylène-oxyde de propylène) diol ou un polytétrahydrofurane diol.

On peut également utiliser un polyester diol, tel qu'un polyadipate diol, un poly ε-caprolactone diol, un polyphtalate diol ou un polycarbonate diol.

On peut encore utiliser un copolymère (éther-ester) diol, comportant de préférence un motif central polyester, par exemple une poly ε-caprolactone, et deux motifs adjacents polyéther, par exemple un polytétrahydrofurane.

A titre de catalyseur de trimérisation selon l'invention, on peut notamment utiliser des amines tertiaires qui permettent de catalyser les réactions de formation des isocyanurates ainsi que les réactions entre des groupes hydroxyl et isocyanate ou eau et isocyanate, comme par exemple la DMEA (diméthyléthanolamine), la TMBDA (tétraméthylbutanediamine), des aminoéthers d'alkyle (par exemple le bis(diméthylaminoethyl)éther), des pipérazines comme la pipéridine, des alkylamines tertiaires comme la 3-dialkylaminopropionamides, la TEA (triéthylamine), la N,N dialkyl-3(dialkylamino)propylamine, des morpholines substituées comme la N-acétamido-propylmorpholine, le tri(diméthylamino)phénol, le tri(diméthylaminométhyl)phénol, ou des sels métalliques comme le dibutyl dilaurate d'étain.

Avantageusement, on utilise le tri(diméthylaminométhyl)phénol ou le dibutyldilaurate d'étain.

Selon un mode particulier de réalisation de l'invention, le copolymère selon l'invention à groupes isocyanurate associés à des groupes urée ou uréthanne est le produit de la réaction dudit polyisocyanate avec ledit polymère fonctionnel, avec ledit catalyseur de trimérisation et en outre avec un allongeur de chaîne comprenant une diamine aromatique.

A titre d'allongeur de chaîne selon l'invention, on peut utiliser un mélange de monoamine et de diamine de viscosité réduite à 20° C, dont une ou plusieurs sont greffées sur un bloc polyéther avec une masse moléculaire comprise entre 250 et 5 000 g/mole, et une ou plusieurs diamines de faible poids moléculaire.

On peut par exemple utiliser, à titre d'allongeur, le mélange d'isomères 2,4 et 2,6 de la DETDA (diéthyltoluène diamine), la pipérazine ou la DEDA (diéthylène diamine), la MEA (monoéthanol amine), la méthylène bis N,N-dibutyldianiline, IPDA (isophorone diamine), un mélange d'isomères 3,5 diméthyl thio 2,4 toluène diamine et de 2,6 toluène diamine.

On peut également utiliser, à titre d'allongeur, des triols tels que le glycérol ou le triméthylol propane, des polyesters ou polyéthers tels que le polyéthylène adipate (PEA) ou tout autre polyadipate, le polypropylène glycol, le polypropylène-glycol diamine, le polytétraméthylène-éther-glycol (PTMEG) ou encore la polytétraméthylène-éther-glycol diamine.

Selon un exemple de réalisation de l'invention, la colle obtenue comprend en outre une silice hydrophobe ou hydrophile, selon une fraction massique allant de 0,01 % à 1 %.

Selon l'invention, cette colle peut par ailleurs comprendre un élastomère diénique issu au moins en partie du butadiène et/ou un polyéther comportant un groupe silane à chacune de ses extrémités de chaîne, selon une fraction massique allant de 1 % à 50 %.

Cet élastomère diénique, comme par exemple un homopolymère du butadiène ou un copolymère butadiène-acrylonitrile, et ce polyéther à groupe silane sont chacun utilisés à l'état liquide (ils sont encore appelés « caoutchoucs liquides réactifs ») pour conférer une flexibilité ou une souplesse donnée à la colle selon l'invention.

A titre d'homopolymère du butadiène, on peut par exemple utiliser un polybutadiène à groupes fonctionnels terminaux hydroxyle.

A titre de copolymère butadiène-acrylonitrile, on peut par exemple utiliser un tel copolymère à groupes terminaux amine.

A titre de polyéther à groupes silane, on peut par exemple utiliser un polyoxypropylène à groupes terminaux silane.

Le procédé selon l'invention de préparation de ladite colle est tel qu'il consiste à faire réagir, pour l'obtention dudit copolymère (en fractions massiques par rapport à la masse totale de réactifs):
- entre 60 % et 70 % dudit polyisocyanate,
- entre 10 % et 20 % dudit polymère fonctionnel,
- entre 0,01 % et 1 % dudit catalyseur de trimérisation, et
- entre 0 % et 20 % dudit allongeur de chaîne.

On notera que cette formulation dans laquelle le polyisocyanate est prévu en excès permet de compenser les pertes ultérieures de ce dernier du fait de l'humidité de l'air ambiant et des surfaces de caoutchouc au contact desquelles est appliquée la colle obtenue (par exemple des surfaces de carcasse ou de bande de roulement d'enveloppe de pneumatique), et des migrations de produits provenant de l'une ou l'autre de ces surfaces de caoutchouc. De plus, cet excès de polyisocyanate confère au mélange obtenu une tenue satisfaisante à la réaction ultérieure d'aminolyse des fonctions urée ou uréthanne.

Selon une autre caractéristique de l'invention, ce procédé de préparation consiste à utiliser, associé audit polyisocyanate, un mélange comprenant ledit polymère fonctionnel, ledit catalyseur de trimérisation et ledit allongeur de chaîne, qui est tel que la viscosité de ce mélange mesurée selon la technique Brookfield est sensiblement comprise entre 38 et 46 Poises.

On notera que ces viscosités réduites pour le polyisocyanate et pour ledit mélange confèrent à ceux-ci un état liquide à la température ambiante, ce qui facilite l'utilisation à la température ambiante de la colle ainsi obtenue.

Une bande de roulement d'enveloppe de pneumatique selon l'invention est constituée d'une composition de caoutchouc réticulée en vue du rechapage, et cette bande de roulement est telle qu'elle comporte ladite colle sur sa face radialement interne.

Une enveloppe de pneumatique selon l'invention est telle qu'elle comporte cette bande de roulement.

Un article selon l'invention comprend deux parties qui sont solidarisées l'une avec l'autre à l'emplacement de deux de leurs faces respectives par l'intermédiaire de ladite colle, l'une au moins desdites faces étant constituée d'une composition de caoutchouc réticulée.

Cette colle est de préférence appliquée sur chacune de ces deux parties, par exemple au moyen d'un pinceau ou d'un pistolet.

Avantageusement, on met en oeuvre le collage à la température ambiante, c'est-à-dire comprise entre 20° C et 40° C, et en exerçant sur les deux parties à coller une pression pouvant aller de 0,03 bar à 5 bars, la durée d'exercice de cette pression étant d'autant plus réduite que l'intensité de celle-ci est plus élevée.

On notera que dans le cas d'une pression de 0,03 bar, celle-ci doit être exercée immédiatement après l'application de la colle, alors que dans le cas d'une pression égale ou supérieure à 2 bars, celle-ci peut être exercée à tout moment avant la gélification de ladite colle.

On notera également qu'un temps de « maturation » de l'assemblage à l'état collé est nécessaire, pour que l'activité de la colle soit garantie. Ce temps est au minimum de 48 heures à la température ambiante, ou de quelques heures à une température comprise entre 60° C et 100 °C.

Selon un exemple de réalisation de l'invention, chacune desdites deux faces est constituée d'une composition de caoutchouc réticulée, en particulier de type comprenant au moins un élastomère diénique à titre majoritaire.

Par élastomère diénique, on entend de manière connue un élastomère issu au moins en partie (c'est-à-dire un homopolymère ou un copolymère) de monomères diènes (monomères porteurs de deux doubles liaisons carbone-carbone, conjuguées ou non), et notamment:
- tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinyle aromatique ayant de 8 à 20 atomes de carbone;
- un copolymère ternaire obtenu par copolymérisation d'éthylène, d'une alpha-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène; ou
- un copolymère d'isobutène et d'isoprène (caoutchouc butyle ou IIR), ainsi que les versions halogénées, en particulier chlorées ou bromées, de ce type de copolymère.

De manière particulièrement préférentielle, l'élastomère diénique est choisi dans le groupe constitué par les polybutadiènes (BR), les polyisoprènes (IR) ou du caoutchouc naturel (NR), les copolymères de butadiène-styrène (SBR), les terpolymères d'éthylène, de propylène et d'un diène (EPDM), le caoutchouc butyle et le chloroprène.

Selon une variante de réalisation de l'invention, l'une des faces des parties à solidariser pour obtenir l'article précité est constituée d'une composition de caoutchouc réticulée, l'autre face étant constituée d'un métal ferreux ou d'un alliage métallique à base de fer, tel que de l'acier.

Selon une autre variante de réalisation de l'invention, l'une desdites faces est constituée d'une composition de caoutchouc réticulée, l'autre face étant constituée d'un tissu synthétique, tel qu'un tissu de type tricot bi-élastique pour former des membranes de conformation contenant des fibres commercialisées sous la marque déposée « LYCRA ».

Selon une autre variante de réalisation de l'invention, l'une desdites faces est constituée d'une composition de caoutchouc réticulée, l'autre face étant constituée d'une matière plastique rigide, telle qu'un polyuréthanne thermodurcissable (application à la décoration d'enveloppes de pneumatique).

Avant d'appliquer la colle selon l'invention sur l'une ou chacune des compositions de caoutchouc réticulées, on procède à une modification chimique ou physique de la surface de la composition correspondante, dans le but de la rendre compatible à la colle selon l'invention pour améliorer son adhésivité et/ou sa mouillabilité.

Cette modification de surface permet en outre d'éliminer les couches dites de contamination ou celles de faible cohésion.

Une modification chimique de l'état de surface peut être mise en oeuvre selon l'une ou l'autre des techniques suivantes.
◇ On peut utiliser de manière connue une solution d'acide trichloroisocyanurique dans un solvant (en abrégé TIC, par exemple à 3 % dans de l'acétate d'éthyle). Cette solution permet de créer des liaisons C-Cl, C-O et COO- à la surface des compositions réticulées.
   On notera que ce solvant peut favoriser le phénomène d'interdiffusion des chaînes macromoléculaires de la colle vis-à-vis de celles des élastomères des compositions réticulées.
   On pourra se reporter aux trois articles suivants pour une description détaillée de cette méthode de modification chimique:
   - Surface modification of synthetic vulcanized rubber, M.M. Pastor-Blas, M.S. Sanchez-Adsuar, J.M. Martin-Martinez, Polymer Surface Modification : Relevance to Adhesion, pp. 379 - 400, 1995.
   - Surface modification of synthetic vulcanized rubber, N. M. Pastor-Blas, M. S. Sanchez-Adsuar, J. M. Martin-Martinez, J. Adhesion Science Technologie, vol. 8, n° 10, pp. 1093-1114(1994).
   - Halogenation of styrene-butadiene rubber to improve its adhesion to polyurethanes, Fernandez-Garcia, Orgiles-Barcelo and Martin-Martinez, J. of Sci Technol, vol. 5, n° 12, pp. 1065-1080 (1991).
◇ On peut également appliquer sur la surface de la composition à traiter une solution d'acide fumarique dans un solvant organique, ou une solution aqueuse de dichloroisocyanurate de sodium, ou bien une solution commercialisée par la société Kömmerling sous la dénomination « HALOSOL W5 ». On peut en outre utiliser des méthodes électrochimiques, en vue de conférer aux assemblages réalisés au moyen de la colle selon l'invention une forte augmentation de la force de pelage.
◇ On peut également immerger la composition à traiter pendant une durée allant de 2 à 5 minutes dans un bain d'eau de javel acidifiée, à base de 25 parties en poids de NaOCl (48° chlorométrique), 10 parties de HCl (d=1,19) pour 1000 parties d'eau déminéralisée. On rince ensuite la composition extraite dudit bain à l'eau de la ville, puis on la sèche en étuve à 60° C.
◇ Une modification physique de l'état de surface peut être par exemple mise en oeuvre selon des techniques utilisant des plasmas (gaz excités émettant des radiations lumineuses, en particulier dans le domaine ultraviolet), tout particulièrement la technique par « décharges Corona », par décharges luminescentes ou encore en utilisant un plasma à la pression atmosphérique.

Ces techniques permettent de créer des groupes polaires (de type carbonyle, carboxyle, hydroxyle, par exemple) à la surface des compositions réticulées, et ce indépendamment de la nature du gaz utilisé (plasmas à base d'oxygène, d'ammoniac, notamment).

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples de colles selon l'invention:

### - Premier exemple (colle 1) selon l'invention:

La colle 1 a été préparée en mélangeant les deux ensembles de réactifs A et B suivants (fractions massiques en %):

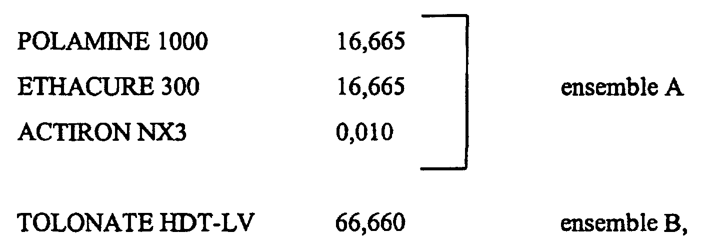

où
POLAMINE 1000 (oxyde de polyéther aminé commercialisé par la société Air Product) est le polyoxytétraméthylène di para-aminobenzoate,
ETHACURE 300 (allongeur de chaîne commercialisé par la société Ethyl Corporation) est la 3,5 diméthylthio 2,4 (et 2,6) toluène diamine,
ACTIRON NX3 (catalyseur de trimérisation commercialisé par la société Protex) est le tridiméthylaminométhyl phénol, et
TOLONATE HDT-LV (polyisocyanate commercialisé par la société Rhodia) est le trimère dérivé de l'hexaméthylène diisocyanate.

### - Second exemple (colle 2) selon l'invention:

La colle 2 a été préparée en mélangeant les deux ensembles de réactifs A et B suivants (fractions massiques en %):

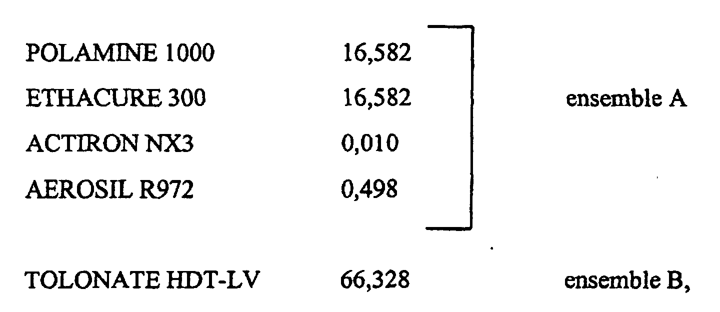

où AEROSIL R972 (commercialisée par la société Dégussa) est une silice hydrophobe.

On a également utilisé dans cet exemple selon l'invention une silice hydrophile AEROSIL R200, commercialisée par la société Dégussa.

### - Troisième exemple (colle 3) selon l'invention:

La colle 3 a été préparée en mélangeant les deux ensembles de réactifs A et B suivants (fractions massiques en %):

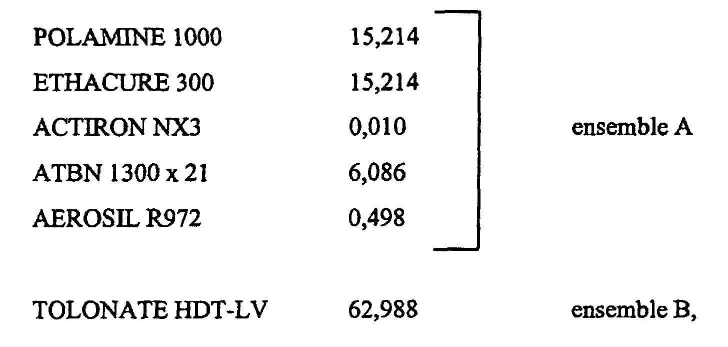

où ATBN 1300 x 21 (caoutchouc liquide réactif commercialisé par la société Hycar) est un copolymère de butadiène et d'acrylonitrile à terminaisons amine.

### - Quatrième exemple (colle 4) selon l'invention:

On a mélangé les 3 ensembles de réactifs A, B et C suivants (fractions massiques, %):

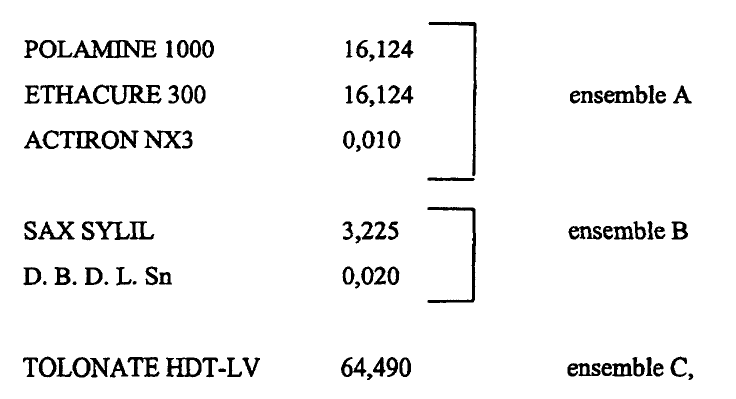

où
D.B.D.L Sn (catalyseur de trimérisation commercialisé par la société Air Product) est le dibutyl dilaurate d'étain, et
SAX SYLIL (caoutchouc liquide réactif commercialisé par la société Kaneka) est un polyoxypropylène à terminaisons silane.

### - Cinquième exemple (colle 5) selon l'invention:

On a mélangé les 2 ensembles de réactifs A et B suivants (fractions massiques en %):

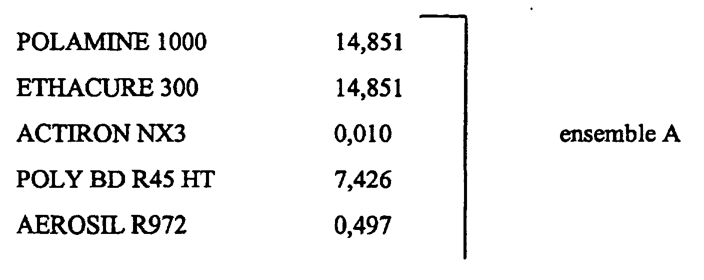

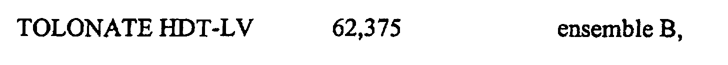

où
POLY BD R45 HT (caoutchouc liquide réactif commercialisé par la société Atochem) est un polymère fonctionnel de butadiène à terminaisons hydroxyle.

### - Sixième exemple (colle 6) selon l'invention:

On a mélangé les 2 ensembles de réactifs A et B suivants (fractions massiques en %):

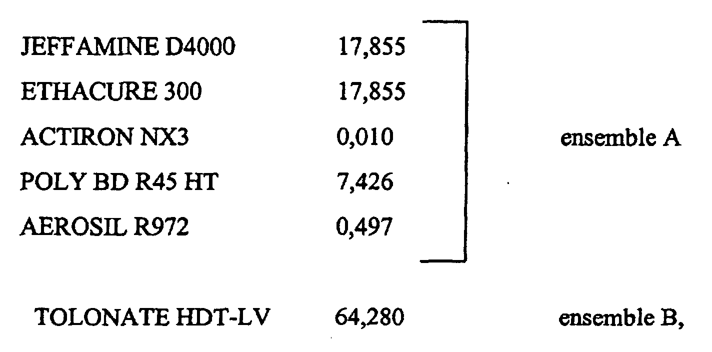

où JEFFAMINE D4000 (oxyde de polyalcène commercialisé par la société Texaco Chemical Company) est une polyoxypropylène diamine.

### Application au collage de deux compositions de caoutchouc réticulées l'une sur l'autre:

Dans les exemples suivants de réalisation de l'invention, on a utilisé, à titre de compositions de caoutchouc réticulées A et B à coller l'une sur l'autre, des éprouvettes comprenant des compositions du type de celles qui sont usuellement utilisées pour la fabrication de bandes de roulement d'enveloppe de pneumatique.

La composition A est à base d'une matrice élastomère constituée de caoutchouc naturel, elle comprend du noir de carbone N299 à titre de charge renforçante, ainsi que les additifs usuels pour enveloppes de pneumatique (incluant une huile d'extension selon une quantité de 5 pce).

La composition B est à base d'une matrice élastomère comprenant 44 pce d'un copolymère de styrène et de butadiène, 34 pce d'un polybutadiène et 22 pce de caoutchouc naturel. Elle comprend également du noir de carbone N375 à titre de charge renforçante (selon une quantité de 63 pce), ainsi que les additifs usuels pour enveloppes de pneumatique (incluant une huile d'extension selon une quantité de 5 pce).

Le mode opératoire pour confectionner les éprouvettes est le suivant.

On calandre chaque composition A, B suivant une épaisseur de 4 mm, puis on découpe les plaques obtenues pour obtenir des rectangles de 300 mm de longueur et de 150 mm de largeur.

On renforce l'une des faces de chaque plaque rectangulaire par un tissu métallique, et l'on protège l'autre face par un tissu textile à base de polyester (ce tissu textile sert de protection jusqu'aux essais de collage).

On procède ensuite à la cuisson de chaque plaque ainsi renforcée.

Puis on arrache le tissu textile de chaque plaque. On notera que l'état de surface de chaque plaque cuite, qui comporte la trace de la trame textile arrachée, est analogue à celui d'une enveloppe de pneumatique après les opérations de déchapage et de cardage, préalables au rechapage.

On a également procédé, préalablement aux essais de collage, à un traitement de la surface du caoutchouc de chaque plaque cuite, en mettant en oeuvre l'un ou l'autre des divers types de traitements (traitements chimiques et traitement physique) qui ont été décrits précédemment, c'est-à-dire:
- l'application d'une solution d'acide trichloroisocyanurique dans un solvant (en abrégé TIC, à 3 % dans de l'acétate d'éthyle), au moyen d'un pinceau. On laisse sécher les deux « éprouvettes » A et B ainsi traitées pendant 15 minutes à la température ambiante.
- l'application d'une solution commercialisée par la société Kömmerling sous la dénomination « HALOSOL W5 »;
- l'immersion pendant une durée allant de 2 à 5 minutes dans un bain d'eau de Javel acidifiée, à base de 25 parties en poids de NaOCl (48° chlorométrique), 10 parties de HCl (d=1,19) pour 1000 parties d'eau déminéralisée, suivie du rinçage de la composition extraite dudit bain à l'eau de la ville, et du séchage en étuve à 60° C;
- l'utilisation de la technique de type plasma avec NH₃ par « décharges Corona », au moyen d'un appareil commercialisé sous la dénomination « Electrotec P 760 », dont les caractéristiques de fonctionnement sont: 2 Kw, 100 mTorr. Le temps de traitement est de 10 minutes.

On a ensuite appliqué au moyen d'un pinceau une quantité uniforme de chacune des colles selon l'invention et selon l'état de la technique, sur les plaques traitées selon l'un ou l'autre des modes cités ci-dessus. L'épaisseur de colle appliquée sur chacune des compositions A et B peut être comprise entre 10 µm et 1,5 mm. Dans ces exemples de réalisation, cette épaisseur est comprise entre 50 µm et 200 µm.

Après avoir mis en contact les plaques ainsi encollées, on les a mises sous presse à la température ambiante, de telle manière que la pression qui s'exerce sur elles soit d'environ 0,03 bars pendant environ 4 heures. On a par ailleurs disposé une amorce entre chaque paire de plaques collées, en vue de réaliser des essais de traction des plaques collées (encore appelés tests de pelage).

On a découpé des éprouvettes de 150 mm de longueur et 15 mm de largeur dans chaque paire de plaques à base des compositions A et B ainsi collées, puis on a soumis les plaques A et B de chaque éprouvette à des tractions de 100 mm / min.

On a mesuré les forces de pelage (en N/mm) pour chacune des éprouvettes, à des températures de 25° C et 100° C.

Le tableau ci-après contient les résultats obtenus.

| Colle | Mode de traitement de surface | force de pelage à 25° C (N/mm) | | Force de pelage à 100° C (N/mm) | |
|---|---|---|---|---|---|
| | | plaque A | plaque B | plaque A | plaque B |
| Colle 1 invention | TIC | 56,5 | 54,6 | | |
| Colle 1 invention | HALOSOL W5 | 31,0 | 49,0 | | |
| Colle 1 invention | Eau de Javel | 39,0 | 50,0 | | |
| Colle 2 invention | TIC | 13,3 | 34,2 | 7,9 | 23,8 |
| Colle 3 invention | TIC | 70,98 | 31,61 | 38,26 | 22,51 |
| Colle 4 invention | TIC | 16,1 | 34,23 | 8,65 | 23,7 |
| Colle 5 invention | TIC | 39,1 | 35,8 | 9,84 | 19,46 |

Il apparaît que les colles selon l'invention présentent dans l'ensemble des forces de pelage d'intensités relativement élevées à 25° C et à 100° C, étant toutes supérieures à 5 N/mm, et étant accompagnées de ruptures cohésives localisées dans les compositions de caoutchouc A et B, ce qui les rend particulièrement adaptées à l'industrie du rechapage de pneumatiques.

En particulier, les colles 1 et 3 selon l'invention (chacune à base de polyoxytétraméthylène di para-aminobenzoate à titre de polymère fonctionnel, de 3,5 diméthylthio 2,4 (et 2,6) toluène diamine à titre d'allongeur, de tridiméthylaminométhyl phénol à titre de catalyseur de trimérisation, et d'un trimère dérivé de l'hexaméthylène diisocyanate à titre de polyisocyanate) présentent des caractéristiques de force de pelage très satisfaisantes.

De plus, des traitements de surface au moyen de « TIC », d'« Halosol » ou d'eau de Javel permettent d'élever les valeurs de force de pelage et d'obtenir des faciès de rupture dans les compositions A et B.

On notera que le traitement de surface au moyen de « TIC » est celui qui donne les meilleurs résultats en termes de force de pelage.

Les colles selon l'invention présentent une tenue satisfaisante à des températures élevées, par exemple proches de 100° C, ainsi qu'en milieu humide et aux rayonnements ultraviolets.

On notera que les colles selon l'invention sont également adaptées à d'autres applications industrielles que le rechapage, par exemple le collage de semelles élastomères de chaussures. Par ailleurs, la colle 4 selon l'invention est notamment adaptée au collage caoutchouc/ métal.

On notera par ailleurs que les colles de l'invention ne comportent pas de solvant et sont à base d'ingrédients classés faiblement irritants, ce qui ne serait pas le cas avec une colle de type polyuréthanne, par exemple.

## Revendications

1. Colle utilisable à la température ambiante pour faire adhérer deux compositions de caoutchouc réticulées l'une à l'autre, ladite colle étant à base d'un copolymère qui comporte des groupes urée ou uréthanne,
**caractérisée en ce que** ledit copolymère comprend également des groupes isocyanurate, ledit copolymère étant le produit de la réaction:
- d'un polyisocyanate de fonctionnalité égale ou supérieure à trois et comprenant des cycles isocyanurate,
- d'un polymère fonctionnel comportant un groupe amine ou alcool à chacune de ses deux extrémités de chaîne, ledit polymère appartenant à la famille constituée par les polyéther diamines, les polyéther diols, les polyester diols et les copolymères (éther-ester) diol, et
- d'au moins un catalyseur de trimérisation destiné à former des cycles isocyanurate à partir de groupes isocyanate, de telle manière que le rapport molaire du nombre total de moles de groupes isocyanate sur le nombre total de moles d'amine soit compris entre 1,5 et 2,2.

2. Colle selon la revendication 1, ladite colle étant à base d'un copolymère comprenant des groupes urée, **caractérisée en ce que** ledit polymère fonctionnel est une polyéther diamine qui est destinée à réagir avec ledit polyisocyanate pour l'obtention desdits groupes urée.

3. Colle selon la revendication 2, **caractérisée en ce que** ledit polymère fonctionnel est le polyoxytétraméthylène di(p-aminobenzoate).

4. Colle selon la revendication 1, ladite colle étant à base d'un copolymère comprenant des groupes uréthanne, **caractérisée en ce que** ledit polymère fonctionnel est un polymère diol d'éther et/ou d'ester qui est destiné à réagir avec ledit polyisocyanate pour l'obtention desdits groupes uréthanne.

5. Colle selon une des revendications précédentes, **caractérisée en ce que** ledit catalyseur de trimérisation est le tri(diméthylaminométhyl)phénol ou le dibutyldilaurate d'étain.

6. Colle selon une des revendications précédentes, **caractérisée en ce que** ledit polyisocyanate est un trimère dérivé de l'hexaméthylène diisocyanate, de fonctionnalité égale ou supérieure à 3.

7. Colle selon une des revendications précédentes, **caractérisée en ce que** ledit copolymère est le produit de la réaction dudit polyisocyanate avec ledit polymère fonctionnel, avec ledit catalyseur de trimérisation et avec un allongeur de chaîne comprenant une diamine aromatique.

8. Colle selon une des revendications précédentes, **caractérisée en ce qu'**elle comprend en outre une silice hydrophobe ou hydrophile selon une fraction massique allant de 0,01 à 1 %.

9. Colle selon une des revendications précédentes, **caractérisée en ce qu'**elle comprend en outre un élastomère diénique issu au moins en partie du butadiène et/ou un polyéther comportant un groupe silane à chacune de ses extrémités de chaîne, selon une fraction massique allant de 1 à 50 %.

10. Procédé de préparation d'une colle selon une des revendications précédentes, **caractérisé en ce qu'**il consiste à faire réagir, pour l'obtention dudit copolymère (en fractions massiques par rapport à la masse totale de réactifs):
- entre 60 % et 70 % dudit polyisocyanate,
- entre 10 % et 20 % dudit oxyde de polyéther ou de polyester aminé,
- entre 0,01 % et 1 % dudit catalyseur de trimérisation, et
- entre 0 % et 20 % dudit allongeur de chaîne.

11. Procédé de préparation d'une colle selon la revendication 10, **caractérisé en ce qu'**il consiste à utiliser un polyisocyanate présentant une viscosité mesurée selon la technique Brookfield qui est sensiblement comprise entre 8 et 16 Poises.

12. Procédé de préparation d'une colle selon la revendication 10 ou 11, **caractérisé en ce qu'**il consiste à utiliser, associé audit polyisocyanate, un mélange comprenant ledit polymère fonctionnel, ledit catalyseur de trimérisation et ledit allongeur de chaîne, dont la viscosité mesurée selon la technique Brookfield est sensiblement comprise entre 38 et 46 Poises.

13. Bande de roulement d'enveloppe de pneumatique, ladite bande de roulement étant constituée d'une composition de caoutchouc réticulée en vue du rechapage, **caractérisée en ce qu'**elle comporte sur sa face radialement interne une colle selon une des revendications 1 à 9.

14. Enveloppe de pneumatique, **caractérisée en ce qu'**elle comporte une bande de roulement selon la revendication 13.

15. Article comprenant deux parties qui sont solidarisées l'une avec l'autre à l'emplacement de deux de leurs faces respectives par l'intermédiaire d'une colle, l'une au moins desdites faces étant constituée d'une composition de caoutchouc réticulée, **caractérisé en ce que** ladite colle est selon une des revendications 1 à 9.

16. Article selon la revendication 15, **caractérisé en ce que** chacune desdites deux faces est constituée d'une composition de caoutchouc réticulée.

17. Article selon la revendication 15, **caractérisé en ce que** l'autre face est constituée d'un tissu synthétique, d'un polymère thermodurcissable, d'un métal ferreux ou d'un alliage métallique à base de fer.

18. Procédé d'obtention d'un article selon une des revendications 15 à 17, **caractérisé en ce qu'**il consiste à modifier chimiquement l'état de surface de ladite ou de chaque face constituée d'une composition de caoutchouc réticulée en y appliquant une solution d'acide trichloroisocyanurique, puis à appliquer ladite colle sur ladite ou chaque face.

## Patentansprüche

1. Klebstoff, der bei Raumtemperatur verwendbar ist, um zwei vernetzte Kautschukmischungen miteinander zu verkleben, wobei der Klebstoff auf einem Copolymer basiert, das Harnstoffgruppen oder Urethangruppen aufweist, **dadurch gekennzeichnet, dass** das Copolymer auch Isocyanuratgruppen aufweist, wobei das Copolymer das Reaktionsprodukt der folgenden Verbindungen ist:
- einem Polyisocyanat mit einer Funktionalität von 3 oder darüber, das Isocyanuratringe enthält,
- einem funktionellen Polymer mit einer Aminogruppe oder einer Alkoholgruppe an beiden Kettenenden, wobei das Polymer aus der Gruppe der Polymere stammt, die aus Polyetherdiaminen, Polyetherdiolen, Polyesterdiolen und (Ether-ester)diol-Copolymeren besteht, und
- mindestens einem Trimerisationskatalysator, der dazu dient, aus den Isocyanatgruppen Isocyanuratringe zu bilden, sodass das Molverhältnis der Gesamtmolzahl der Isocyanatgruppen und der Gesamtmolzahl der Amine im Bereich von 1,5 bis 2,2 liegt.

2. Klebstoff nach Anspruch 1, wobei der Klebstoff auf einem Copolymer basiert, das Harnstoffgruppen aufweist, **dadurch gekennzeichnet, dass** das funktionelle Polymer ein Polyetherdiamin ist, das dazu vorgesehen ist, mit dem Polyisocyanat unter Bildung von Harnstoffgruppen zu reagieren.

3. Klebstoff nach Anspruch 2, **dadurch gekennzeichnet, dass** das funktionelle Polymer das Polyoxytetramethylen-di-(p-aminobenzoat) ist.

4. Klebstoff nach Anspruch 1, wobei der Klebstoff auf einem Copolymer basiert, das Urethangruppen enthält, **dadurch gekennzeichnet, dass** das funktionelle Polymer ein Etherdiolpolymer und/oder Esterdiolpolymer ist, das dazu vorgesehen ist, mit dem Polyisocyanat unter Bildung von Urethangruppen zu reagieren.

5. Klebstoff nach einem der vorhergehenden Ansprüche, **dadurch gekennzeichnet, dass** der Trimerisationskatalysator das Tri(dimethylaminomethyl)phenol oder Zinndibutyldilaurat ist.

6. Klebstoff nach einem der vorhergehenden Ansprüche, **dadurch gekennzeichnet, dass** das Polyisocyanat ein Trimer, das von Hexamethylendiisocyanat abgeleitet ist, mit einer Funktionalität von 3 oder darüber ist.

7. Klebstoff nach einem der vorhergehenden Ansprüche, **dadurch gekennzeichnet, dass** das Copolymer das Reaktionsprodukt aus Polyisocyanat und funktionellem Polymer, Trimerisationskatalysator und einem Kettenverlängerer ist, der ein aromatisches Diamin enthält.

8. Klebstoff nach einem der vorhergehenden Ansprüche, **dadurch gekennzeichnet, dass** er ferner eine hydrophobe oder hydrophile Kieselsäure in einem Masseanteil von 0,01 bis 1 % enthält.

9. Klebstoff nach einem der vorhergehenden Ansprüche, **dadurch gekennzeichnet, dass** er ferner ein Dienelastomer, das zumindest zum Teil von Butadien und/oder einem Polyether mit einer Silangruppe an jedem Kettenende abgeleitet ist, in einem Masseanteil von 1 bis 50 % enthält.

10. Verfahren zur Herstellung eines Klebstoffs nach einem der vorhergehenden Ansprüche, **dadurch gekennzeichnet, dass** es darin besteht, zur Herstellung des Polymers umzusetzen (in Masseanteilen, bezogen auf die Gesamtmasse der Reaktanten):
- 60 bis 70 % Polyisocyanat,
- 10 bis 20 % aminierten Polyester oder Polyether,
- 0,01 bis 1 % Trimerisationskatalysator und
- 0 bis 20 % Kettenverlängerer.

11. Verfahren zur Herstellung eines Klebstoffs nach Anspruch 10, **dadurch gekennzeichnet, dass** es darin besteht, ein Polyisocyanat zu verwenden, das eine nach der Brookfield-Technik gemessene Viskosität aufweist, die im etwa im Bereich von 8 bis 16 Poise liegt.

12. Verfahren zur Herstellung eines Klebstoffs nach Anspruch 10 oder 11, **dadurch gekennzeichnet, dass** es darin besteht, in Kombination mit dem Polyisocyanat ein Gemisch zu verwenden, das das funktionelle Polymer, den Trimerisationskatalysator und den Kettenverlängerer enthält und dessen nach der Brookfield-Technik gemessene Viskosität in etwa im Bereich von 38 bis 46 Poise liegt.

13. Laufstreifen eines Luftreifens zur Runderneuerung, wobei der Laufstreifen aus einer vernetzten Kautschukmischung besteht, **dadurch gekennzeichnet, dass** er an seiner radial innen liegenden Fläche einen Klebstoff nach einem der Ansprüche 1 bis 9 aufweist.

14. Luftreifen, **dadurch gekennzeichnet, dass** er einen Laufstreifen nach Anspruch 13 umfasst.

15. Artikel mit zwei Teilen, die über einen Klebstoff an zwei ihrer Flächen fest miteinander verbunden sind, wobei mindestens eine Fläche aus einer vernetzten Kautschukmischung besteht, **dadurch gekennzeichnet, dass** es sich bei dem Klebstoff um einen Klebstoff nach einem der Ansprüche 1 bis 9 handelt.

16. Gegenstand nach Anspruch 15, **dadurch gekennzeichnet, dass** die beiden Flächen aus einer vernetzten Kautschukmischung bestehen.

17. Gegenstand nach Anspruch 15, **dadurch gekennzeichnet, dass** die andere Fläche aus einem synthetischen Gewebe, einem wärmehärtbaren Polymer, einem Eisenmetall oder einer Metalllegierung auf Eisenbasis besteht.

18. Verfahren zur Herstellung eines Gegenstands nach einem der Ansprüche 15 bis 17, **dadurch gekennzeichnet, dass** es darin besteht, den Oberflächenzustand der Fläche oder beider Flächen, die aus einer vernetzten Kautschukmischung bestehen, chemisch zu verändern, indem eine Trichlorisocyanursäure-Lösung aufgetragen wird, und anschließend auf diese Fläche oder jede Fläche den Klebstoff aufzubringen.

## Claims

1. Adhesive which can be used at ambient temperature to bond together two crosslinked rubber compositions, the said adhesive being based on a copolymer which comprises urea or urethane groups,
**characterized in that** the said copolymer also comprises isocyanurate groups, the said copolymer being the product of the reaction:
- of a polyisocyanate of functionality greater than or equal to three and comprising isocyanurate rings,
- of a functional polymer comprising an amine or alcohol group at each of its two chain ends, the said polymer belonging to the family consisting of polyether diamines, polyether diols, polyester diols and (ether-ester) diol copolymers, and
- of at least one trimerization catalyst intended to form isocyanurate rings from isocyanate groups, such that the molar ratio of the total number of moles of isocyanate groups to the total number of moles of amine is between 1.5 and 2.2.

2. Adhesive according to Claim 1, the said adhesive being based on a copolymer comprising urea groups, **characterized in that** the said functional polymer is a polyether diamine which is intended to react with the said polyisocyanate to obtain the said urea groups.

3. Adhesive according to Claim 2, **characterized in that** the said functional polymer is polyoxytetramethylene bis(p-aminobenzoate).

4. Adhesive according to Claim 1, the said adhesive being based on a copolymer comprising urethane groups, **characterized in that** the said functional polymer is an ether and/or ester diol polymer which is intended to react with the said polyisocyanate to obtain the said urethane groups.

5. Adhesive according to one of the preceding claims, **characterized in that** the said trimerization catalyst is tris(dimethylaminomethyl)phenol or dibutyltin dilaurate.

6. Adhesive according to one of the preceding claims, **characterized in that** the said polyisocyanate is a trimer derived from hexamethylene diisocyanate, of functionality greater than or equal to 3.

7. Adhesive according to one of the preceding claims, **characterized in that** the said copolymer is the product of the reaction of the said polyisocyanate with the said functional polymer, with the said trimerization catalyst and with a chain extender comprising an aromatic diamine.

8. Adhesive according to one of the preceding claims, **characterized in that** it also comprises a hydrophobic or hydrophilic silica in a mass fraction ranging from 0.01 to 1%.

9. Adhesive according to one of the preceding claims, **characterized in that** it also comprises a diene elastomer at least partly derived from butadiene and/or a polyether comprising a silane group at each of its chain ends, in a mass fraction ranging from 1 to 50%.

10. Process for preparing an adhesive according to one of the preceding claims, **characterized in that** it consists in reacting, to obtain the said copolymer (as mass fractions relative to the total mass of reagents):
- between 60% and 70% of the said polyisocyanate,
- between 10% and 20% of the said polyether oxide amine or polyester oxide amine,
- between 0.01% and 1% of the said trimerization catalyst, and
- between 0% and 20% of the said chain extender.

11. Process for preparing an adhesive according to Claim 10, **characterized in that** it consists in using a polyisocyanate with a viscosity, measured according to the Brookfield technique, which is substantially between 8 and 16 Poises.

12. Process for preparing an adhesive according to Claim 10 or 11, **characterized in that** it consists in using, combined with the said polyisocyanate, a mixture comprising the said functional polymer, the said trimerization catalyst and the said chain extender, the viscosity of which, measured according to the Brookfield technique, is substantially between 38 and 46 Poises.

13. Tyre tread, the said tread consisting of a crosslinked rubber composition for the purpose of retreading, **characterized in that** it comprises on its radially internal face an adhesive according to one of Claims 1 to 9.

14. Tyre cover, **characterized in that** it comprises a tread according to Claim 13.

15. Article comprising two parts which are bonded together at two of their respective faces by means of an adhesive, at least one of the said faces consisting of a crosslinked rubber composition, **characterized in that** the said adhesive is in accordance with one of Claims 1 to 9.

16. Article according to Claim 15, **characterized in that** each of the said two faces consists of a crosslinked rubber composition.

17. Article according to Claim 15, **characterized in that** the other face consists of a synthetic fabric, a thermosetting polymer, a ferrous metal or an iron-based metal alloy.

18. Process for obtaining an article according to one of Claims 15 to 17, **characterized in that** it consists in chemically modifying the surface state of the said or of each face consisting of a crosslinked rubber composition, by applying thereto a trichloroisocyanuric acid solution and then in applying the said adhesive to the said or to each face.
